# EUROPÄISCHE PATENTSCHRIFT

(11) **EP 3 406 484 B1**
(45) Veröffentlichungstag und Bekanntmachung des Hinweises auf die Patenterteilung: **08.07.2020**
(21) Anmeldenummer: 18170954.4
(22) Anmeldetag: 07.05.2018
(51) Int. Cl.: B60N 2/90, B60N 3/08

(54) **BEHÄLTERSYSTEM FÜR EIN KRAFTFAHRZEUG**
CONTAINER SYSTEM FOR A MOTOR VEHICLE
SYSTÈME DE RÉCIPIENT POUR UN VÉHICULE AUTOMOBILE

(30) Priorität: 23.05.2017 DE 102017111231
(43) Veröffentlichungstag der Anmeldung: 28.11.2018
(73) Patentinhaber: MAN Truck & Bus SE, 80995 München (DE)
(72) Erfinder: Poliak, Slava, 81539 München (DE); Siflinger, Markus, 85604 Zorneding (DE); Bauer, Christian, 83646 Wackersberg (DE)
(74) Vertreter: v. Bezold & Partner Patentanwälte - PartG mbB

(56) Entgegenhaltungen:
- EP-A1- 0 931 481
- DE-A1-102007 052 444

## Beschreibung

Die Erfindung betrifft ein Behältersystem zum Einbau in ein Kraftfahrzeug. Die Erfindung betrifft ferner ein Kraftfahrzeug, insbesondere ein Nutzfahrzeug, mit einem Behältersystem.

Behältersysteme können mit einem Rahmen und einem schwenkbar (kippbar) mit dem Rahmen verbundenen Behälter ausgestattet sein. Der Behälter kann zwischen einer Schließstellung und einer Öffnungsstellung verschwenkt werden. In der Schließstellung ist der Behälter nicht zugänglich im Rahmen angeordnet. In der Öffnungsstellung ist der Behälter zugänglich und kann befüllt werden.

Es gibt zahlreiche Schließsysteme (Verriegelungseinrichtungen) für derartige Behälter, die den Behälter in der Schließstellung halten. Die Schließsysteme lassen sich grob in zwei Gruppen einteilen. Die Schließsysteme der ersten Gruppe weisen meist einen einfachen Aufbau auf und funktionieren einfach und schnell. Jedoch können die Schließsysteme der ersten Gruppe häufig keine sichere Verriegelung des Behälters gewährleisten. Wirken auf den Behälter beispielsweise Erschütterungen, zum Beispiel während einer Fahrt eines Kraftfahrzeugs mit dem Behälter, so kann der Behälter ungewollt in die Öffnungsstellung schwenken. Die zweite Gruppe von Schließsystemen weist einen aufwendigen Aufbau, d. h. insbesondere zusätzliche Bauteile, auf. Die zweite Gruppe von Schließsystemen kann den Behälter zwar sicher in der Schließstellung halten, ist jedoch aufgrund des aufwendigen Aufbaus kostenintensiver und komplexer in der Handhabung. Bei Behältersystemen, in denen der Behälter entnehmbar ist, ist die Entnahme und der Einbau des Behälters bei Systemen der zweiten Gruppe zudem typischerweise relativ aufwendig.

Ein Beispiel für ein Behältersystem ist in der DE 20 2010 012 304 U1 beschrieben. Hier wird ein Abfallbehälter bestehend aus Innen- und Außeneimer offenbart. Der Inneneimer ist über ein Scharnier aufklappbar. Das Scharnier des Inneneimers ist durch die Ausprägung eines geeigneten spitzen Winkels im unteren Drittel des Inneneimers so gestaltet, dass der Winkel auf einer dazu passenden, nach innen gerichteten Schräge des Außeneimers sitzt, welche als Rotationsachse dient, über die das Herauskippen des Inneneimers erfolgt.

Außerdem offenbart die EP 2 216 272 A1 eine Abfallsammelvorrichtung. Die Abfallsammelvorrichtung weist mindestens einen Abfallbehälter auf, welcher an einem Träger befestigt ist. Der Abfallbehälter ist mit einem Schwenkscharnier verbunden, sodass der Abfallbehälter von einer Befüllposition in eine Entleerungsposition um eine Schwenkachse verschwenkbar gelagert ist. Ein Verschwenkmittel ist zwischen Träger und Abfallbehälter in einem Halteprofil angeordnet. Hiermit ist eine gefederte und gedämpfte Verschwenkung des Abfallbehälters erreichbar. Eine Verriegelungseinrichtung kann den Abfallbehälter in der Befüllposition halten. Ein in der Befüllposition an der Schwenkachse erzeugtes Drehmoment der Verriegelungseinrichtung wirkt gegen die Verriegelungseinrichtung, d. h. beaufschlagt die Verriegelungseinrichtung zum Freigeben des Abfallbehälters.

Die DE 10 2007 052444 A1 offenbart einen Einbau-Aschenbecher, bei dem in einer Aufnahme ein Aschenbehälter aus einer abgedeckten Schließstellung in eine Gebrauchsstellung schwenkbar ist.

Der Erfindung liegt die Aufgabe zu Grunde, ein Behältersystem mit Schwenkverbindung und Verriegelungseinrichtung bereitzustellen, wobei die Verriegelungseinrichtung einfach und schnell funktioniert und eine sichere Schließung gewährleistet.

Die Aufgabe wird gelöst durch ein Behältersystem für den Einbau in ein Kraftfahrzeug gemäß dem unabhängigen Anspruch. Vorteilhafte Weiterbildungen sind in den abhängigen Ansprüchen angegeben.

Das Behältersystem weist einen Rahmen und einen Behälter, insbesondere einen Abfallbehälter, auf. Das Behältersystem weist zudem eine Schwenkverbindung auf, die den Behälter mit dem Rahmen um eine Schwenkachse verschwenkbar verbindet. Das Behältersystem weist eine Verriegelungseinrichtung, die mit dem Rahmen verbunden und dazu ausgebildet ist, den Behälter in einer ersten Stellung, insbesondere einer Schließstellung, zu halten, auf. Der Behälter ist über die Schwenkverbindung in die erste Stellung verschwenkbar. In der ersten Stellung lagert die Schwenkverbindung den Behälter außerhalb von einer Gleichgewichtslage des Behälters, sodass eine Gewichtskraft des Behälters ein Drehmoment an dem Behälter um die Schwenkachse erzeugt. Mit dem Drehmoment des Behälters wird die Verriegelungseinrichtung zum Halten des Behälters in der ersten Stellung beaufschlagt.

Mit anderen Worten gesagt, unterstützt das Drehmoment die Verriegelungseinrichtung beim Halten des Behälters in der ersten Stellung.

Die Beaufschlagung der Verriegelungseinrichtung mit einem am Behälter erzeugten Drehmoment bietet eine einfache und schnelle Verriegelung. Zudem wird eine sichere Schließung der Verriegelungseinrichtung gewährleistet. Die Gewichtskraft des Behälters unterstützt die Verriegelung. Diese Vorteile sind ohne Vorsehen zusätzlicher Bauteile zum Verriegeln erzielbar.

Es versteht sich, dass sich der Ausdruck "Gleichgewichtslage des Behälters" auf eine Situation bezieht, die ohne die Verriegelungseinrichtung besteht. D. h., die Gleichgewichtslage des Behälters berücksichtigt lediglich den Behälter, insbesondere den Schwerpunkt des Behälters, und die Schwenkverbindung, insbesondere die Position der Schwenkverbindung, in einer Situation ohne die Verriegelungseinrichtung. Die Gleichgewichtslage bezieht sich insbesondere auf ein stabiles Gleichgewicht, das sich bei Auslenkung des Körpers (Behälters) durch ein rückstellendes Moment wieder neu einstellt.

Mit anderen Worten gesagt, ist die Schwenkverbindung, insbesondere die Schwenkachse der Schwenkverbindung, in der ersten Stellung beabstandet zu einer Vertikalachse durch einen Schwerpunkt des Behälters angeordnet.

Die Verriegelungseinrichtung kann insbesondere die einzige Einrichtung des Behältersystems zum Halten des Behälters in der ersten Stellung sein.

Die Verriegelungseinrichtung kann an dem Rahmen befestigt sein.

Die Verriegelungseinrichtung kann den Behälter beispielsweise an einer oberen Hälfte, insbesondere einem oberen Drittel, des Behälters halten. Die Schwenkverbindung kann den Behälter beispielsweise an einer unteren Hälfte, insbesondere einem unteren Drittel, des Behälters schwenkbar mit dem Rahmen verbinden.

Der Rahmen kann dazu ausgebildet sein, den Behälter in der ersten Stellung aufzunehmen.

In einem besonders bevorzugten Ausführungsbeispiel weist die Verriegelungseinrichtung ein erstes Verriegelungselement, das mit dem Behälter zumindest in der ersten Stellung verbunden ist, und ein zweites Verriegelungselement, das mit dem Rahmen verbunden ist, auf. Das erste Verriegelungselement und das zweite Verriegelungselement sind dazu ausgebildet, in der ersten Stellung des Behälters, beaufschlagt durch das Drehmoment, miteinander einzugreifen. Dies hat den Vorteil, dass eine Sperrkraft, mit der das erste Verriegelungselement in das zweite Verriegelungselement eingreift, mit dem Drehmoment beaufschlagt werden kann.

Das erste Verriegelungselement kann beispielsweise ein Abschnitt des Behälters sein oder separat von den Behälter vorgesehen sein.

In einer Ausführungsvariante drückt das erste Verriegelungselement in der ersten Stellung mit einer Sperrkraft gegen das zweite Verriegelungselement. Die Sperrkraft wird durch die Beaufschlagung mit dem Drehmoment erzeugt oder erhöht. D. h., das erste Verriegelungselement kann bereits mit einer Sperrkraft gegen das zweite Verriegelungselement drücken, die dann von dem Drehmoment erhöht wird. Andererseits kann zwischen den Verriegelungselementen bspw. lediglich ein Formschluss bestehen, der durch eine Sperrkraft, die von dem Drehmoment erzeugt wird, ergänzt wird. Somit wird eine sichere Verriegelung durch die Verriegelungseinrichtung ermöglicht.

In einer Ausführungsform erhöht sich eine Sperrkraft der Verriegelungseinrichtung mit zunehmender Gewichtskraft des Behälters, insbesondere durch Füllen des Behälters. Dies hat den Vorteil, dass wenn der Behälter beispielsweise mit Abfall gefüllt wird, die Verriegelung sich mit zunehmender Füllung des Behälters verbessert. Damit kann insbesondere ein ungewolltes Verschwenken des Behälters in eine Öffnungsstellung bei einem gefüllten Behälter verhindert werden.

Vorteilhafterweise ist der Behälter über die Schwenkverbindung aus der ersten Stellung in eine zweite Stellung, insbesondere eine Öffnungsstellung, vorzugsweise unter Überwindung einer Sperrkraft der Verriegelungseinrichtung verschwenkbar. Alternativ oder zusätzlich weist der Rahmen eine Öffnung auf, aus der der Behälter über die Schwenkverbindung in eine zweite Stellung, insbesondere eine Öffnungsstellung, schwenkbar ist. In der Öffnungsstellung ist der Behälter für einen Benutzer zugänglich und kann beispielsweise befüllt oder zum Entleeren entnommen werden.

Vorzugsweise ist das erste Verriegelungselement ein elastisch verformbarer Körper, der beim Schwenken in die erste Stellung von dem zweiten Verriegelungselement verformt wird. Alternativ oder ergänzend weist das erste Verriegelungselement eine Aufnahme, insbesondere eine Vertiefung, für das zweite Verriegelungselement auf. Beim Schwenken in die erste Stellung kann das zweite Verriegelungselement das erste Verriegelungselement wegdrücken, um in eine Aufnahme des ersten Verriegelungselements zu gelangen. Andererseits kann das zweite Verriegelungselement das erste Verriegelungselement beim Schwenken in die zweite Stellung wegdrücken, um aus der Aufnahme des ersten Verriegelungselements zu gelangen.

In einem weiteren Ausführungsbeispiel ist das erste Verriegelungselement lösbar mit dem Behälter verbunden, und weist insbesondere einen Rastbereich auf, in den der Behälter, insbesondere eine Seitenwand des Behälters, einrastbar ist. Alternativ oder zusätzlich ist das erste Verriegelungselement in einer zweiten Stellung des Behälters für einen Benutzer zugänglich. Das erste Verriegelungselement kann somit zwei Aufgaben übernehmen. Einerseits kann das erste Verriegelungselement den Behälter in der ersten Stellung an dem zweiten Verriegelungselement halten. Andererseits kann das erste Verriegelungselement von dem Behälter lösbar sein, sodass der Behälter ohne die Verriegelungseinrichtung entnommen werden kann. Dazu ist die erste Verriegelungseinrichtung in der zweiten Stellung für einen Benutzer zugänglich.

In einer weiteren Ausführungsform weist der Behälter eine Aufnahme für die Schwenkachse auf. Der Behälter kann über die Aufnahme für die Schwenkachse lösbar auf die Schwenkachse aufsetzbar sein, sodass der Behälter entnehmbar ist. Alternativ oder zusätzlich verjüngt sich die Aufnahme für die Schwenkachse zum Zentrieren des Behälters auf der Schwenkachse. Alternativ oder zusätzlich ist die Aufnahme für die Schwenkachse in einem Bodenbereich des Behälters, insbesondere einem Bodeneckbereich des Behälters, angeordnet.

In einer weiteren Ausführungsvariante ist die Verriegelungseinrichtung so angeordnet, dass sie den Behälter in der ersten Stellung an einem der Schwenkverbindung entgegengesetztem Ende des Behälters hält. Dies hat den Vorteil, dass das auf die Schwenkverbindung wirkende Drehmoment aufgrund einer Vergrößerung einer Hebellänge möglichst groß wird. Die Verriegelungseinrichtung kann den Behälter sicher in der ersten Stellung halten.

Vorteilhafterweise weist das Behältersystem eine Blende, insbesondere eine Frontblende, auf. Die Blende ist über die Schwenkverbindung gemeinsam mit dem Behälter relativ zu dem Rahmen verschwenkbar. Die Blende kann in der ersten Stellung bündig mit einer Öffnung im Rahmen sein. In der ersten Stellung kann die Blende einen Sichtschutz und/oder Geruchsschutz zwischen dem Abfall im Behälter und einem Außenraum, z. B. einer Fahrerkabine, ermöglichen.

Vorzugsweise ist das erste Verriegelungselement an der Blende befestigt und der Behälter lösbar mit der Blende über das erste Verriegelungselement, insbesondere einen Rastbereich des ersten Verriegelungselements, verbunden. Das erste Verbindungselement weist eine Doppelfunktion auf. Einerseits dient es zum Halten des Behälters an dem zweiten Verriegelungselement in der ersten Stellung. Andererseits kann der Behälter beispielsweise in einer zweiten Stellung von der Blende gelöst, entnommen und entleert werden. Nach dem Entleeren kann der Behälter durch Einrasten mit dem ersten Verriegelungselement wieder an der Blende angebracht werden.

In einer weiteren Ausführungsvariante ist das erste Verriegelungselement insbesondere als ein elastisch verformbarer Körper ausgebildet, mit einem ersten Abschnitt, der an der Blende befestigt ist. Alternativ oder zusätzlich weist das erste Verriegelungselement einen zweiten Abschnitt auf, der eine Aufnahme für das zweite Verriegelungselement aufweist. Alternativ oder zusätzlich weist das Verriegelungselement einen dritten Abschnitt auf, der einen Rastbereich zum Einrasten des Behälters aufweist. Das Verriegelungselement kann somit je nach Ausführungsform und Anforderung wahlweise mehrere Funktionen übernehmen. Beispielsweise kann das erste Verriegelungselement den Behälter an der Blende anbringen. Zusätzlich kann das erste Verriegelungselement mit dem zweiten Verriegelungselement zusammenwirken. Der Aufbau aus einer Mehrzahl von Abschnitten kann eine bauraumgünstige Konstruktion ermöglichen.

Der erste Abschnitt kann an den zweiten Abschnitt angrenzen. Der zweite Abschnitt kann an den ersten Abschnitt und den dritten Abschnitt angrenzen. Der dritte Abschnitt kann an den zweiten Abschnitt angrenzen.

In einem weiteren Ausführungsbeispiel sind der erste Abschnitt, der zweite Abschnitt und/oder der dritte Abschnitt relativ zueinander bewegbar. Dies ermöglicht zum Beispiel, dass sich der dritte Abschnitt relativ zum zweiten Abschnitt bewegen kann, um ein Einrasten einer Seitenwand des Behälters in einen Rastbereich des dritten Abschnitts zu ermöglichen. Zudem kann der zweite Abschnitt relativ zum ersten Abschnitt bewegt werden, wenn der Behälter in die ersten Stellung oder aus der ersten Stellung verschwenkt wird. Das zweite Verriegelungselement kann den zweiten Abschnitt wegdrücken, um in eine Aufnahme oder aus der Aufnahme im zweiten Abschnitt zu gelangen. Eine Bewegung des zweiten und dritten Abschnitts relativ zum ersten Abschnitt kann zudem ein Lösen (Ausrasten) des Behälters ermöglichen. Der Behälter kann entnommen werden.

Alternativ oder zusätzlich schließen der erste Abschnitt und der zweite Abschnitt in einer Ruhestellung des ersten Verriegelungselements einen Winkel insbesondere in einem Bereich zwischen 45° und 135°, vorzugsweise ungefähr 90°, ein. Alternativ oder zusätzlich liegen der zweite Abschnitt und der dritte Abschnitt in einer Ruhestellung des ersten Verriegelungselements einander gegenüber. Somit wird ermöglicht, dass das erste Verriegelungselement nur wenig Bauraum zur Erzielung mehrerer Funktionen benötigt.

Vorzugsweise ist der Behälter über die Schwenkverbindung zwischen einer ersten Stellung und einer zweiten Stellung verschwenkbar. Die erste Stellung ist eine Schließstellung, in der der Behälter von außen (von außerhalb des Behältersystems) unzugänglich ist. Mit anderen Worten gesagt, ist der Behälter in der ersten Stellung im Rahmen aufgenommen. Alternativ oder zusätzlich kann die zweite Stellung eine Öffnungsstellung sein, in der der Behälter von außen (von außerhalb des Behältersystems) zugänglich ist. Mit anderen Worten gesagt, befindet sich der Behälter in der zweiten Stellung zumindest teilweise außerhalb des Rahmens. Folglich kann das erzeugte Drehmoment den Behälter in der Schließstellung geschlossen halten. In der Öffnungsstellung kann der Behälter befüllt und ggf. entnommen werden.

In einer weiteren Ausführungsvariante ist das Behältersystem als ein Modul zum Einbau in ein Kraftfahrzeug ausgebildet. Das Behältersystem kann somit auf einfache Weise einen Kraftfahrzeug, insbesondere eine Fahrzeugkabine des Kraftfahrzeugs, integriert werden.

Die Erfindung betrifft ferner ein Kraftfahrzeug, insbesondere ein Nutzfahrzeug, mit einem Behältersystem wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

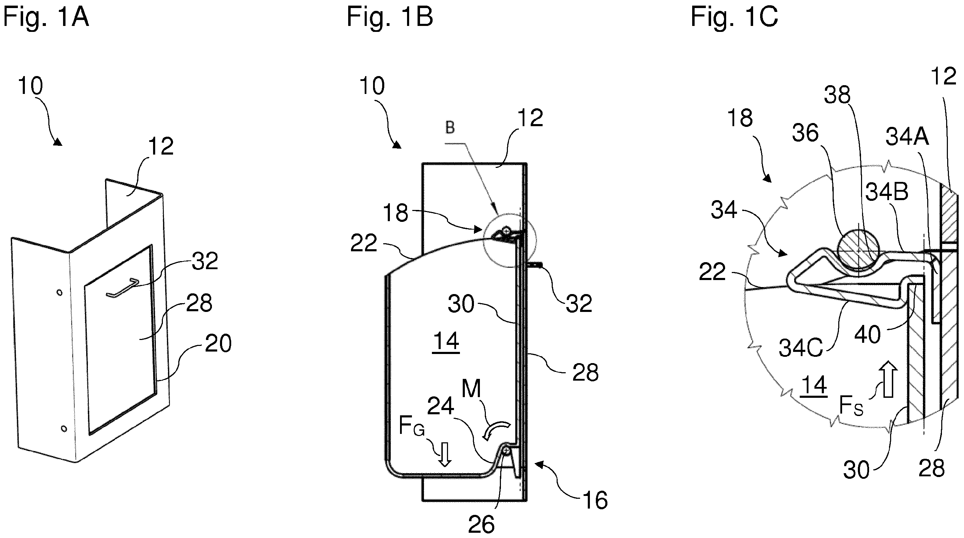

- Figur 1A: eine perspektivische Ansicht eines beispielhaften Behältersystems in einer Schließstellung; und
- Figur 1: B eine Schnittansicht des Behältersystems von Figur 1A;
- Figur 1C: das vergrößerte Detail B von Figur 1B;
- Figur 2A: eine perspektivische Ansicht des beispielhaften Behältersystems in einer Öffnungsstellung;
- Figur 2B: eine Schnittansicht des Behältersystems von Figur 2A;
- Figur 2C: das vergrößerte Detail C von Figur 2B;
- Figur 3A: eine perspektivische Ansicht des beispielhaften Behältersystems in einer Öffnungsstellung mit einer gelösten Behälterverriegelung;
- Figur 3B: eine Schnittansicht des Behältersystems von Figur 3A;
- Figur 3C: das vergrößerte Detail D von Figur 3B;
- Figur 4A: eine perspektivische Ansicht des beispielhaften Behältersystems in einer Öffnungsstellung während der Behälter entnommen wird;
- Figur 4B: eine Schnittansicht des Behältersystems von Figur 4A;
- Figur 5A: eine perspektivische Ansicht des beispielhaften Behältersystems in einer Öffnungsstellung mit entnommenem Behälter;
- Figur 5B: eine Schnittansicht des Behältersystems von Figur 5A;

Die Figuren 1A und 1B zeigen ein Behältersystem 10. Das Behältersystem 10 weist einen Rahmen 12, einen Behälter 14, eine Schwenkverbindung 16 und eine Verriegelungseinrichtung 18 auf. Das Behältersystem 10 ist als ein Modul zum Einbau in ein Kraftfahrzeug ausgebildet. Der Behälter 14 kann beispielsweise als ein entnehmbarer Abfallbehälter verwendet werden.

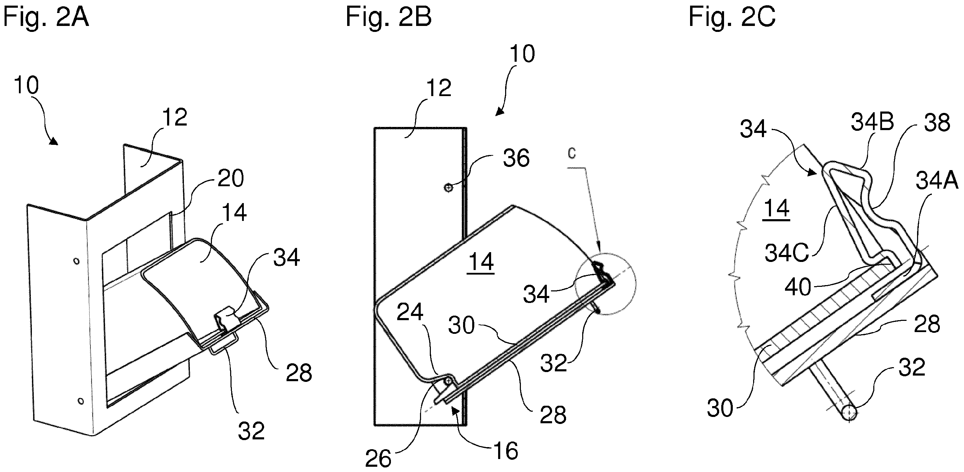

Der Rahmen 12 ist dazu ausgebildet, in eine Fahrerkabine eines Kraftfahrzeugs integriert zu werden. Der Rahmen 12 kann beispielsweise in einer Mittelkonsole des Kraftfahrzeugs in einer aufrechten Stellung, wie in Figur 1A dargestellt ist, eingebaut werden. Der Rahmen 12 kann beispielsweise in einer U-Form ausgebildet sein. Der Rahmen 12 weist eine Öffnung 20 auf. Durch die Öffnung 20 kann der Behälter 12 teilweise aus dem Rahmen 12 geschwenkt (gekippt) werden (vgl. Figuren 2A-3C).

Im Rahmen 12 ist der Behälter 14 schwenkbar über die Schwenkverbindung 16 gelagert. Der Behälter 14 weist eine Öffnung 22 an einem oberen Ende auf. In der dargestellten Schließstellung des Behältersystems 10 ist die Öffnung 22 von außen nicht zugänglich.

Der Behälter 14 weist eine Aufnahme 24 zur Lagerung einer Schwenkachse 26 der Schwenkverbindung 16 auf. Die Aufnahme 24 ist in einem Bodenbereich des Behälters 14 angeordnet. Im Einzelnen ist die Aufnahme 14 in einem Eckabschnitt des Bodenbereichs des Behälters 14 angeordnet. Der Behälter 14 ist über die Aufnahme 24 auf die Schwenkachse 26 aufgesetzt. Die Aufnahme 24 hat einen V-förmigen Querschnitt, d.h. die Aufnahme 24 verjüngt sich. Der Behälter 14 kann somit einfach auf die Schwenkachse 26 aufgesetzt und von der Schwenkachse 26 in die gewünschte Stellung geführt werden. Die Aufnahme 24 ist an einem Ende des Behälters 14 angeordnet, dass der Verriegelungseinrichtung 18 gegenüberliegt.

Die Schwenkverbindung 16 weist die Schwenkachse 26 auf, die an dem Rahmen 12 befestigt ist. Die Schwenkverbindung 16 ermöglicht eine Verschwenken des Behälters 14 aus der dargestellten Schließstellung (ersten Stellung) in eine Öffnungsstellung (zweite Stellung) (siehe z. B. Figuren 2A und 2B). In der dargestellten Ausführungsform sind die Schwenkachse 26 und die Aufnahme 24 nicht mittig an einem Bodenbereich des Behälters 14 angeordnet. Stattdessen sind die Schwenkachse 26 und die Aufnahme 24 in einem Randbereich des Behälters 14 angeordnet. Somit lagert die Schwenkverbindung 16 den Behälter 14 in der dargestellten Schließstellung außerhalb von einer Gleichgewichtslage des Behälters 14. In der Schließstellung wird ein Drehmoment M an dem Behälter 14 um die Schwenkachse 26 erzeugt.

Der Behälter 14 ist ferner lösbar mit einer Blende 28 verbunden. Die Blende 28 ist ebenfalls über die Schwenkverbindung 26 schwenkbar mit dem Rahmen 12 verbunden. Der Behälter 14 und die Blende 28 können zusammen verschwenkt werden. Die Blende 28 erstreckt sich parallel zu einer Seitenwand (Vorderwand) 30 des Behälters 14. In der dargestellten Schließstellung des Behältersystems 10 ist die Blende 28 in der Öffnung 20 des Rahmens 12 positioniert. An der Blende 28 ist ein Handgriff 32 befestigt. Über den Handgriff 32 kann die Blende 28 zusammen mit dem Behälter 14 aus der Öffnung 20 des Rahmens 12 geschwenkt werden.

Die Verriegelungseinrichtung 18 ist in Figur 1C im Detail dargestellt. Die Verriegelungseinrichtung 18 weist ein erstes Verriegelungselement 34 und ein zweites Verriegelungselement 36 auf. Das zweite Verriegelungselement 36 ist an dem Rahmen 12 befestigt. In der dargestellten Ausführungsform ist das zweite Verriegelungselement 36 als ein Stab ausgebildet.

Die Verriegelung des Behälters 14 in der Schließstellung ist erforderlich, um ein unbeabsichtigtes Öffnen zum Beispiel aufgrund einer (positiven oder negativen) Beschleunigung des Kraftfahrzeugs zu verhindern. Ferner kann die Verriegelungsvorrichtung 18 verhindern, dass der Behälter 14 oder die Blende 28 während der Fahrt aufgrund von Bodenunebenheiten oder ähnlichem klappert.

Das erste Verriegelungselement 34 weist einen ersten Abschnitt 34A, einen zweiten Abschnitt 34B und einen dritten Abschnitt 34C auf. Der erste Abschnitt 34A ist an einer Innenfläche der Blende 28 befestigt. Der zweite Abschnitt 34B grenzt an den ersten Abschnitt 34A an. Der zweite Abschnitt 34B weist eine Aufnahme 38 in der Form einer Vertiefung zum Ineinandergreifen mit dem ersten Verriegelungselement 36 auf. Der dritte Abschnitt 34C grenzt an den zweiten Abschnitt 34B. Der dritte Abschnitt 34C ist lösbar mit der Seitenwand 30 des Behälters 14 verbunden. Der dritte Abschnitt 34C weist dazu einen Rastbereich 40 auf. Der Rastbereich 40 stützt sich an der Seitenwand 30, insbesondere einer Kante der Seitenwand 30 an der Öffnung 22 des Behälters 14, ab.

Folglich beaufschlagt die Seitenwand 30 den dritten Abschnitt 34C. Der dritte Abschnitt 34C wird dadurch nach oben gedrückt. Damit wird auch der zweite Abschnitt 34B nach oben gedrückt und die Aufnahme 38 wird gegen das zweite Verriegelungselement 36 gedrückt.

Wie erläutert wurde, lagert die Schwenkverbindung 16 den Behälter 14 in der Schließstellung außerhalb einer Gleichgewichtslage. Dadurch erzeugt eine Gewichtskraft F_{G} (siehe Figur 1B) des Behälters 14 ein Drehmoment M um die Schwenkachse 26. Das Drehmoment M wirkt über die Seitenwand 30 auf den dritten Abschnitt 34C des ersten Verriegelungselements 34. Das erste Verriegelungselement 34 wird gegen zweite Verriegelungselement 36 gedrückt. Insbesondere führt das Drehmoment M zur Ausbildung einer Sperrkraft Fs (siehe Figur 1C), mit der das erste Verriegelungselement 34 gegen das zweite Verbindungselement 36 gedrückt wird. Mit anderen Worten gesagt, beaufschlagt das Drehmoment M die Verriegelungseinrichtung 18 zum Halten des Behälters 14 in der Schließstellung.

Umso größer das Drehmoment M ist, umso größer wird die Sperrkraft Fs. Das Drehmoment M wird größer, wenn die Gewichtskraft F_{G} sich vergrößert. D. h., umso stärker der Behälter 14 gefüllt wird, umso besser wirkt die Verriegelungseinrichtung 18.

In der dargestellten Ausführungsform ist das erste Verriegelungselement 34 als ein elastisch verformbarer Körper ausgebildet. Insbesondere sind der erste Abschnitt 34A, der zweite Abschnitt 34B und der dritte Abschnitt 34C relativ zueinander bewegbar. In einer Ruhestellung des ersten Verriegelungselements 34 schließen der erste Abschnitt 34A und der zweite Abschnitt 34B einen Winkel ein. Der Winkel liegt insbesondere in einem Bereich zwischen 45° und 135°, vorzugsweise bei rund 90°. In der Ruhestellung liegen sich der zweite Abschnitt 34B und der dritte Abschnitt 34C gegenüber. Der erste, zweite und dritte Abschnitt 34A-34C sind als Schenkel ausgebildet.

Alternativ kann das erste Verriegelungselement als ein nicht elastisch verformbarer Körper ausgebildet sein. Zum Beispiel kann das erste Verriegelungselement schwenkbar an der Blende 28 befestigt und durch ein elastisches Element in Richtung zu dem zweiten Verriegelungselement 36 vorgespannt sein.

Der Behälter 14 kann zusammen mit der Blende 28 aus der Schließstellung in eine Öffnungsstellung unter Überwindung der Sperrkraft Fs der Verriegelungseinrichtung 18 verschwenkt werden. Das erste Verbindungselement 34 wird vom zweiten Verbindungselement 36 nach unten gedrückt. Das zweite Verbindungselement 36 verlässt die Aufnahme 38 und ermöglicht ein Verschwenken in die Öffnungsstellung. Außerhalb der Schließstellung sind die Verbindungselemente 34 und 36 nicht in Eingriff.

Die Figuren 2A bis 2C zeigen den Behälter 14 in der Öffnungsstellung. In der Schließstellung, während des Verschwenkens in die Öffnungsstellung und in der Öffnungsstellung hält das erste Verriegelungselement 34 den Behälter 14 an der Blende 28 (siehe Figur 2C). In der Öffnungsstellung kann der Behälter 14 zum Beispiel mit Abfall gefüllt werden. Nach dem Befüllen kann der Behälter 14 zurück in die Schließstellung verschwenkt werden, in der die Verriegelungselemente 34 und 36 wieder ineinandergreifen.

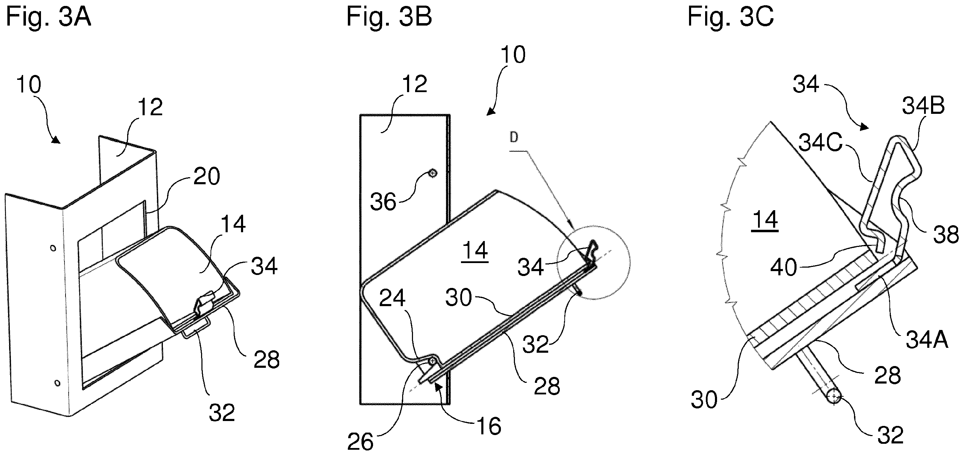

Wie den Figuren 3A bis 3C entnommen werden kann, kann der Behälter 14 zum Entleeren aus dem Behältersystem 10 in der Öffnungsstellung entnommen werden. Dazu wird das erste Verriegelungselement 34, das den Behälter 14 an der Blende 28 hält, so gebogen, dass der Rastbereich 40 außer Eingriff mit der Seitenwand 30 des Behälters 14 gelangt. Das erste Verriegelungselement 34 kann beispielsweise manuell nach oben gedrückt werden.

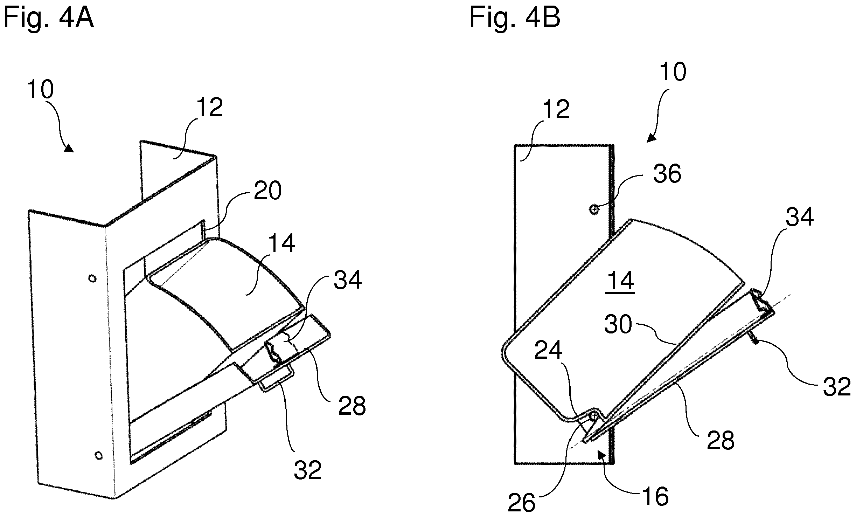

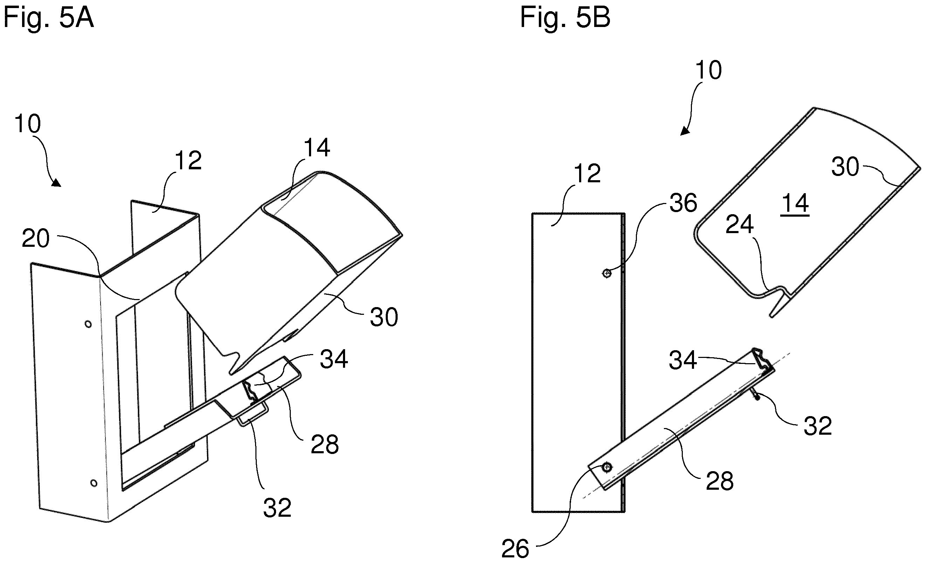

Der Behälter 14 kann nun vorbei an dem Verriegelungselement 34 geführt (Figuren 4A und 4B) und aus dem Rahmen 12 entnommen werden (Figuren 5A und 5B). Dazu wird der Behälter 14 über die Schwenkvorrichtung 16 weg von der Blende 28 geschwenkt und schließlich von der Schwenkachse 26 gehoben. Das als elastischer Körper ausgebildete, erste Verriegelungselement 34 muss lediglich kurzzeitig zum Freigeben des Behälters 14 bewegt werden und kann nach der Freigabe erneut eine Ruhestellung einnehmen.

Nach dem Entleeren kann der Behälter 14 wieder eingesetzt werden. Zum Einsetzen des Behälters 14 wird die Aufnahme 24 auf die Schwenkachse 26 aufgesetzt. Die Seitenwand 30 wird in Eingriff mit dem Rastbereich 40 gebracht, sodass der Behälter 14 wieder sicher von der Blende 28 gehalten wird. Die Blende 28 kann dann wieder zusammen mit dem Behälter 14 in die Schließstellung verschwenkt werden (Figuren 1A-1C).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Behältersystem
- 12: Rahmen
- 14: Behälter
- 16: Schwenkverbindung
- 18: Verriegelungseinrichtung
- 20: Öffnung
- 22: Öffnung
- 24: Aufnahme
- 26: Schwenkachse
- 28: Blende
- 30: Seitenwand
- 32: Handgriff
- 34: Erstes Verriegelungselement
- 34A: Erster Abschnitt
- 34B: Zweiter Abschnitt
- 34C: Dritter Abschnitt
- 36: Zweites Verriegelungselement
- 38: Aufnahme
- 40: Rastbereich
- M: Drehmoment
- F_{G}: Gewichtskraft
- Fs: Sperrkraft

## Patentansprüche

1. Behältersystem (10) für den Einbau in ein Kraftfahrzeug, aufweisend:
einen Rahmen (12);
einen Behälter (14), insbesondere einen Abfallbehälter;
eine Schwenkverbindung (16), die den Behälter (14) mit dem Rahmen (12) um eine Schwenkachse (26) verschwenkbar verbindet; und
eine Verriegelungseinrichtung (18), die mit dem Rahmen (12) verbunden und dazu ausgebildet ist, den Behälter (14) in einer ersten Stellung zu halten;
wobei der Behälter (14) über die Schwenkverbindung (16) in die erste Stellung verschwenkbar ist, in der die Schwenkverbindung (16) den Behälter (14) außerhalb von einer Gleichgewichtslage des Behälters (14) lagert, sodass eine Gewichtskraft (F_{G}) des Behälters (14) ein Drehmoment (M) an dem Behälter (14) um die Schwenkachse (26) erzeugt,
**dadurch gekennzeichnet, dass**
der Behälter (14) die Verriegelungseinrichtung (18) in der ersten Stellung zum Halten des Behälters (14) in der ersten Stellung mit dem Drehmoment (M) beaufschlagt.

2. Behältersystem (10) nach Anspruch 1, wobei die Verriegelungseinrichtung (18) ein erstes Verriegelungselement (34), das mit dem Behälter (14) zumindest in der ersten Stellung verbunden ist, und ein zweites Verriegelungselement (36), das mit dem Rahmen (12) verbunden ist, aufweist, wobei das erste Verriegelungselement (34) und das zweite Verriegelungselement (36) dazu ausgebildet sind, in der ersten Stellung des Behälters (14), beaufschlagt durch das Drehmoment (M), miteinander einzugreifen.

3. Behältersystem (10) nach Anspruch 2, wobei das erste Verriegelungselement (34) in der ersten Stellung mit einer Sperrkraft (F_{S}) gegen das zweite Verriegelungselement (36) drückt, wobei die Sperrkraft (F_{S}) durch die Beaufschlagung mit dem Drehmoment (M) erzeugt oder erhöht wird.

4. Behältersystem (10) nach einem der vorherigen Ansprüche, wobei sich eine Sperrkraft (F_{S}) der Verriegelungseinrichtung (18) mit zunehmender Gewichtskraft (F_{G}) des Behälters (14), insbesondere durch Füllen des Behälters (14), erhöht.

5. Behältersystem (10) nach einem der vorherigen Ansprüche, wobei:
der Behälter (14) über die Schwenkverbindung (16) aus der ersten Stellung in eine zweite Stellung insbesondere unter Überwindung einer Sperrkraft (F_{S}) der Verriegelungseinrichtung (18) verschwenkbar ist; und/oder
der Rahmen (12) eine Öffnung (20) aufweist, aus der der Behälter (14) über die Schwenkverbindung (16) in eine zweite Stellung schwenkbar ist.

6. Behältersystem (10) nach einem der Ansprüche 2 bis 5, wobei:
das erste Verriegelungselement (34) ein elastisch verformbarer Körper ist, der beim Schwenken in die erste Stellung von dem zweiten Verriegelungselement (36) verformt wird; und/oder
das erste Verriegelungselement (34) eine Aufnahme (38), insbesondere eine Vertiefung, für das zweite Verriegelungselement (36) aufweist.

7. Behältersystem (10) nach einem der Ansprüche 2 bis 6, wobei:
das erste Verriegelungselement (34) lösbar mit dem Behälter (14) verbunden ist, und insbesondere einen Rastbereich (40) aufweist, in den der Behälter (14), insbesondere eine Seitenwand (30) des Behälters (14), einrastbar ist; und/oder
das erste Verriegelungselement (34) in einer zweiten Stellung des Behälters (14) für einen Benutzer zugänglich ist.

8. Behältersystem (10) nach einem der vorherigen Ansprüche, wobei der Behälter (14) eine Aufnahme (24) für die Schwenkachse (26) aufweist, wobei:
der Behälter (14) über die Aufnahme (24) für die Schwenkachse (26) lösbar auf die Schwenkachse (26) aufsetzbar ist, sodass der Behälter (14) entnehmbar ist; und/oder
die Aufnahme (24) für die Schwenkachse (26) sich zum Zentrieren des Behälters (14) auf der Schwenkachse (26) verjüngt; und/oder
die Aufnahme (24) für die Schwenkachse (26) in einem Bodenbereich des Behälters (14), insbesondere einem Bodeneckbereich des Behälters (14), angeordnet ist.

9. Behältersystem (10) nach einem der vorherigen Ansprüche, wobei die Verriegelungseinrichtung (18) so angeordnet ist, dass sie den Behälter (14) in der ersten Stellung an einem der Schwenkverbindung (16) entgegengesetztem Ende des Behälters (14) hält.

10. Behältersystem (10) nach einem der vorherigen Ansprüche, ferner aufweisend eine Blende (28), insbesondere eine Frontblende, die über die Schwenkverbindung (16) gemeinsam mit dem Behälter (14) relativ zu dem Rahmen (12) verschwenkbar ist.

11. Behältersystem (10) nach Anspruch 10, wobei das erste Verriegelungselement (34) an der Blende (28) befestigt und der Behälter (14) lösbar mit der Blende (28) über das erste Verriegelungselement (34), insbesondere einen Rastbereich (40) des ersten Verriegelungselements (34), verbunden ist.

12. Behältersystem (10) nach einem der Ansprüche 2 bis 11, wobei das erste Verriegelungselement (34) insbesondere als ein elastisch verformbarer Körper ausgebildet ist, wobei das erste Verriegelungselement (34) aufweist:
einen ersten Abschnitt (34A), der an der Blende (28) befestigt ist; und/oder
einen zweiten Abschnitt (34B), der eine Aufnahme (38) für das zweite Verriegelungselement (36) aufweist; und/oder
einen dritten Abschnitt (34C), der einen Rastbereich (40) zum Einrasten des Behälters (14) aufweist.

13. Behältersystem (10) nach Anspruch 12, wobei:
der erste Abschnitt (34A), der zweite Abschnitt (34B) und/oder der dritte Abschnitt (34C) relativ zueinander bewegbar sind; und/oder
der erste Abschnitt (34A) und der zweite Abschnitt (34B) in einer Ruhestellung des ersten Verriegelungselements (34) einen Winkel insbesondere in einem Bereich zwischen 45° und 135° einschließen; und/oder
der zweite Abschnitt (34B) und der dritte Abschnitt (34C) in einer Ruhestellung des ersten Verriegelungselements (34) einander gegenüberliegen.

14. Behältersystem (10) nach einem der vorherigen Ansprüche, wobei:
der Behälter (14) über die Schwenkverbindung (16) zwischen einer ersten Stellung und einer zweiten Stellung verschwenkbar ist, wobei die erste Stellung eine Schließstellung ist, in der der Behälter (14) von außen unzugänglich ist, und die zweite Stellung eine Öffnungsstellung ist, in der der Behälter (14) von außen zugänglich ist; und/oder
das Behältersystem (10) als ein Modul zum Einbau in ein Kraftfahrzeug ausgebildet ist.

15. Kraftfahrzeug, insbesondere Nutzfahrzeug, mit einem Behältersystem (10) nach einem der vorherigen Ansprüche.

## Claims

1. A container system (10) for installing in a motor vehicle, having:
a frame (12);
a container (14), in particular a refuse container;
a pivoting connection (16), which connects the container (14) to the frame (12) such that it can be pivoted about a pivot pin (26); and
a locking device (18), which is connected to the frame (12) and is designed to retain the container (14) in a first position;
wherein the container (14) can be pivoted via the pivoting connection (16), into the first position, in which the pivoting connection (16) supports the container (14) outside an equilibrium position of the container (14), a weight-induced force (F_{G}) of the container (14) thus subjecting the container (14) to a torque (M) about the pivot axis (26), **characterized in that**,
in the first position, the container (14) acts on the locking device (18) by way of the torque (M) in order for the container (14) to be retained in the first position.

2. The container system (10) according to Claim 1, wherein the locking device (18) has a first locking element (34), which is connected to the container (14) at least in the first position, and a second locking element (36), which is connected to the frame (12), wherein the first locking element (34) and the second locking element (36) are designed to engage with one another in the first position of the container (14), under the action of the torque (M).

3. The container system (10) according to Claim 2, wherein, in the first position, the first locking element (34) pushes against the second locking element (36) by way of a blocking force (F_{S}), wherein the blocking force (Fₛ) is generated or increased under the action of the torque (M).

4. The container system (10) according to one of the preceding claims, wherein a blocking force (Fₛ) of the locking device (18) increases as the weight-induced force (F_{G}) of the container (14) increases, in particular as a result of the container (14) being filled.

5. The container system (10) according to one of the preceding claims, wherein:
the container (14) can be pivoted, via the pivoting connection (16), out of the first position into a second position, in particular with a blocking force (F_{S}) of the locking device (18) being overcome in the process; and/or
the frame (12) has an opening (20) out of which the container (14) can be pivoted, via the pivoting connection (16), into a second position.

6. The container system (10) according to one of Claims 2 to 5, wherein:
the first locking element (34) is an elastically deformable body which, during pivoting operation into the first position, is deformed by the second locking element (36); and/or
the first locking element (34) has a mount (38), in particular a depression, for the second locking element (36).

7. The container system (10) according to one of Claims 2 to 6, wherein:
the first locking element (34) is connected to the container (14) in a releasable manner and has in particular a latching region (40), into which the container (14), in particular a side wall (30) of the container (14), can be latched; and/or
in a second position of the container (14), the first locking element (34) is accessible to a user.

8. The container system (10) according to one of the preceding claims, wherein the container (14) has a mount (24) for the pivot pin (26), wherein:
the container (14) can be positioned on the pivot pin (26) in a releasable manner via the mount (24) for the pivot pin (26), the container (14) therefore being removable; and/or
the mount (24) for the pivot pin (26) tapers for the purpose of the container (14) being centred on the pivot pin (25); and/or
the mount (24) for the pivot pin (26) is arranged in a base region of the container (14), in particular in a base corner region of the container (14) .

9. The container system (10) according to one of the preceding claims, wherein the locking device (18) is arranged such that it retains the container (14), in the first position, at an end of the container (14) which is opposite to the pivoting connection (16) .

10. The container system (10) according to one of the preceding claims, also having a panel (28), in particular a front panel, which can be pivoted relative to the frame (12), together with the container (14), via the pivoting connection (16).

11. The container system (10) according to Claim 10, wherein the first locking element (34) is fastened on the panel (28) and the container (14) is connected to the panel (28) in a releasable manner via the first locking element (34), in particular via a latching region (40) of the first locking element (34).

12. The container system (10) according to one of Claims 2 to 11, wherein the first locking element (34) is designed in particular in the form of an elastically deformable body, wherein the first locking element (34) has:
a first portion (34A), which is fastened on the panel (28); and/or
a second portion (34B), which has a mount (38) for the second locking element (36); and/or
a third portion (34C), which has a latching region (40) into which to latch the container (14).

13. The container system (10) according to Claim 12, wherein:
the first portion (34A), the second portion (34B) and/or the third portion (34C) can be moved relative to one another; and/or
in a rest position of the first locking element (34), the first portion (34A) and the second portion (34B) enclose an angle in particular ranging between 45° and 135°; and/or,
in a rest position of the first locking element (34), the second portion (34B) and the third portion (34C) are located opposite one another.

14. The container system (10) according to one of the preceding claims, wherein:
the container (14) can be pivoted, via the pivoting connection (16), between a first position and a second position, wherein the first position is a closed position, in which there is no access to the container (14) from the outside, and the second position is an open position, in which the container (14) is accessible from the outside; and/or
the container system (10) is designed in the form of a module for installing in a motor vehicle.

15. A motor vehicle, in particular a commercial vehicle, having a container system (10) according to one of the preceding claims.

## Revendications

1. Système de récipient (10) destiné à être installé dans un véhicule automobile, comprenant :
un cadre (12) ;
un récipient (14), en particulier un récipient à déchets ; une liaison pivotante (16) qui relie le récipient (14) au cadre (12) de manière pivotante autour d'un axe de pivotement (26) ; et
un dispositif de verrouillage (18) qui est relié au cadre (12) et est réalisé pour maintenir le récipient (14) dans une première position ;
dans lequel le récipient (14) peut, par le biais de la liaison pivotante (16), être pivoté dans la première position, dans laquelle la liaison pivotante (16) supporte le récipient (14) hors d'une position d'équilibre du récipient (14), de sorte qu'un poids (F_{G}) du récipient (14) produise un couple (M) sur le récipient (14) autour de l'axe de pivotement (26),
**caractérisé en ce que**
le récipient (14) sollicite le dispositif de verrouillage (18) dans la première position à l'aide du couple (M) pour maintenir le récipient (14) dans la première position.

2. Système de récipient (10) selon la revendication 1, dans lequel le dispositif de verrouillage (18) comprend un premier élément de verrouillage (34) qui est relié au récipient (14) au moins dans la première position, et un deuxième élément de verrouillage (36) qui est relié au cadre (12), dans lequel le premier élément de verrouillage (34) et le deuxième élément de verrouillage (36) sont réalisés pour venir en prise l'un avec l'autre dans la première position du récipient (14), de manière sollicitée par le couple (M).

3. Système de récipient (10) selon la revendication 2, dans lequel le premier élément de verrouillage (34) presse par une force de blocage (Fₛ) contre le deuxième élément de verrouillage (36) dans la première position, dans lequel la force de blocage (Fₛ) est produite ou augmentée par la sollicitation à l'aide du couple (M).

4. Système de récipient (10) selon l'une des revendications précédentes, dans lequel une force de blocage (Fₛ) du dispositif de verrouillage (18) augmente au fur et à mesure que le poids (F_{G}) du récipient (14) augmente, en particulier par remplissage du récipient (14) .

5. Système de récipient (10) selon l'une des revendications précédentes, dans lequel :
le récipient (14) peut, par le biais de la liaison pivotante (16), être pivoté de la première position à une deuxième position en particulier en surmontant une force de blocage (Fₛ) du dispositif de verrouillage (18) ; et/ou le cadre (12) comprend une ouverture (20) hors de laquelle le récipient (14) peut être pivoté dans une deuxième position par le biais de la liaison pivotante (16) .

6. Système de récipient (10) selon l'une des revendications 2 à 5, dans lequel :
le premier élément de verrouillage (34) est un corps déformable élastiquement qui est déformé par le deuxième élément de verrouillage (36) lors du pivotement dans la première position ; et/ou
le premier élément de verrouillage (34) comprend un logement (38), en particulier un évidement, pour le deuxième élément de verrouillage (36).

7. Système de récipient (10) selon l'une des revendications 2 à 6, dans lequel :
le premier élément de verrouillage (34) est relié de manière amovible au récipient (14) et comprend en particulier une région d'encliquetage (40) dans laquelle le récipient (14), en particulier une paroi latérale (30) du récipient (14), peut être encliqueté(e) ; et/ou le premier élément de verrouillage (34) est accessible à un utilisateur dans une deuxième position du récipient (14) .

8. Système de récipient (10) selon l'une des revendications précédentes, dans lequel le récipient (14) comprend un logement (24) pour l'axe de pivotement (26), dans lequel :
le récipient (14) peut être placé de manière amovible sur l'axe de pivotement (26) par le biais du logement (24) pour l'axe de pivotement (26), de sorte que le récipient (14) puisse être retiré ; et/ou
le logement (24) pour l'axe de pivotement (26) se rétrécit pour le centrage du récipient (14) sur l'axe de pivotement (26) ; et/ou
le logement (24) pour l'axe de pivotement (26) est disposé dans une région de base du récipient (14), en particulier une région de coin de base du récipient (14).

9. Système de récipient (10) selon l'une des revendications précédentes, dans lequel le dispositif de verrouillage (18) est disposé de telle sorte qu'il maintient le récipient (14) dans la première position à une extrémité du récipient (14) opposée à la liaison pivotante (16).

10. Système de récipient (10) selon l'une des revendications précédentes, comprenant en outre un cache (28), en particulier un cache frontal, qui peut être pivoté par rapport au cadre (12) conjointement avec le récipient (14) par le biais de la liaison pivotante (16).

11. Système de récipient (10) selon la revendication 10, dans lequel le premier élément de verrouillage (34) est fixé au cache (28) et le récipient (14) est relié de manière amovible au cache (28) par le biais du premier élément de verrouillage (34), en particulier d'une région d'encliquetage (40) du premier élément de verrouillage (34) .

12. Système de récipient (10) selon l'une des revendications 2 à 11, dans lequel le premier élément de verrouillage (34) est réalisé en particulier sous la forme d'un corps déformable élastiquement, dans lequel le premier élément de verrouillage (34) comprend :
une première partie (34A) qui est fixée au cache (28) ; et/ou
une deuxième partie (34B) qui comprend un logement (38) pour le deuxième élément de verrouillage (36) ; et/ou une troisième partie (34C) qui comprend une région d'encliquetage (40) pour l'encliquetage du récipient (14).

13. Système de récipient (10) selon la revendication 12, dans lequel :
la première partie (34A), la deuxième partie (34B) et/ou la troisième partie (34C) sont déplaçables les unes par rapport aux autres ; et/ou
la première partie (34A) et la deuxième partie (34B) forment, dans une position de repos du premier élément de verrouillage (34), un angle en particulier dans une plage comprise entre 45° et 135° ; et/ou
la deuxième partie (34B) et la troisième partie (34C) se font face dans une position de repos du premier élément de verrouillage (34).

14. Système de récipient (10) selon l'une des revendications précédentes, dans lequel :
le récipient (14) peut, par le biais de la liaison pivotante (16), être pivoté entre une première position et une deuxième position, dans lequel la première position est une position de fermeture dans laquelle le récipient (14) n'est pas accessible depuis l'extérieur, et la deuxième position est une position d'ouverture dans laquelle le récipient (14) est accessible depuis l'extérieur ; et/ou
le système de récipient (10) est réalisé sous forme de module destiné à être installé dans un véhicule automobile.

15. Véhicule automobile, en particulier véhicule utilitaire, comprenant un système de récipient (10) selon l'une des revendications précédentes.
